# EUROPÄISCHE PATENTSCHRIFT

(11) **EP 0 714 751 B1**
(45) Veröffentlichungstag und Bekanntmachung des Hinweises auf die Patenterteilung: **11.03.1998**
(21) Anmeldenummer: 95118322.7
(22) Anmeldetag: 22.11.1995
(51) Int. Cl.: B29C 49/42

(54) **Vorrichtung und Verfahren zum Transportieren eines Vorformlings von dem Schlauchkopf zu der Blasform einer Blasmaschine**
Apparatus and method for transporting a parison from an annular die to a blow mould of a blow moulding machine
Dispositif et procédé pour transporter une paraison d'une filière annulaire au moule de soufflage d'une machine de moulage par soufflage

(30) Priorität: 28.11.1994 DE 4442252
(43) Veröffentlichungstag der Anmeldung: 05.06.1996
(73) Patentinhaber: VERWALTUNGSGESELLSCHAFT GEIGER TECHNIK GmbH & Co. KG, D-82467 Garmisch-Partenkirchen (DE)
(72) Erfinder: Geiger, Albert, D-82467 Garmisch-Partenkirchen (DE)
(74) Vertreter: Flosdorff, Jürgen, Dr.

(56) Entgegenhaltungen:
- EP-A- 0 248 306
- DE-A- 3 737 453
- DE-C- 4 305 735
- US-A- 5 264 178

## Beschreibung

Die Erfindung betrifft eine Vorformlings-Transportvorrichtung für eine Blasmaschine zur Herstellung von ein- oder mehrfach gekrümmten Hohlkörpern wie Rohrstücken mit einem Schlauchkopf, der einen warmplastisch verformbaren Schlauch austrägt, wobei die Vorformling-Transportvorrichtung eine oben offene Formmulde hat, deren Boden geöffnet werden kann, und zwischen dem Schlauchkopf und der Blasstation bewegbar ist.

Die Erfindung betrifft auch ein Verfahren zum Herstellen von ein- oder mehrfach gekrümmten Hohlkörpern.

Bei der Herstellung von Hohlkörpern wie ein- oder mehrfach gekrümmten Rohrstücken besteht die Schwierigkeit, den schlauchförmigen Vorformling in die Blasform einzuführen. Weil das dem herzustellenden Hohlkörper entsprechende Formnest der Blasform mehr als eine Achse hat und diese Achsen im Winkel zueinander im Raum liegen, d.h. das Formnest aus mehreren, nach beiden Seiten auf und ab verlaufenden Abschnitten bestehen kann, muß der entweder waagerecht oder schräg liegende Teil der Blasform während des geradlinigen Ausstoßes eines schlauchförmigen Vorformlings entsprechend hin- und her sowie auf- und abgefahren werden, oder diese Bewegungen müssen bei stillstehender Form vom Extruder ausgeführt werden. Da hierzu entweder das gesamte Schließgestell mit der Blasform oder der Extruder mit zugehörigem Schlauchkopf in drei zueinander senkrechten Achsen bewegt werden muß, ist die Bewegung erheblicher Massen erforderlich, da sowohl die Schließgestelle als auch die Extruder selbst bei kleinen Maschinen mehrere Tonnen wiegen.

Um das Bewegen einer der beiden schweren Baugruppen Extruder/Schlauchkopf oder Schließgestell mit Blasform zu vermeiden, wird in der DE 43 05 735 C1 eine leichte Zwischentransportform vorgeschlagen gemäß dem einleitenden Teil des Anspruchs 1, die eine nach oben offene Formmulde enthält, deren Boden geöffnet werden kann. Diese Zwischentransportform nimmt den aus dem Schlauchkopf austretenden Schlauch auf und wird dann zu der Blasstation bewegt gemäß dem einleitenden Teil des Anspruchs 10, um den Schlauch an die Blasform zu übergeben. Die Zwischentransportform hat unter anderem deshalb ein geringes Gewicht, weil an ihr keine Schließkräfte angreifen und in ihr keine Kühlkanäle untergebracht werden müssen, so daß sie mit einem sehr viel geringen Aufwand bewegbar ist als eine der Baugruppen Extruder/Schlauchkopf und Schließgestell mit Blasform.

Die Formmulde der Zwischentransportform gemäß der DE 43 05 735 hat die Gestalt des Formnestes der Blasform. Zur Aufnahme des aus dem Schlauchkopf austretenden Schlauches wird die Zwischentransportform in ihrer Schlauchaufnahmestellung in beiden waagerechten Richtungen (X- und Y-Achse) bewegt sowie in senkrechter Richtung angehoben oder gesenkt, bis das gesamte Schlauchstück in der Formmulde liegt. Anschließend wird die Zwischentransportform so über dem unteren Teil der Blasform positioniert, daß ihre Formmulde vertikal über dem Formnest der Blasform liegt, woraufhin der Boden der Formmulde geöffnet wird, so daß der Vorformling in das Formnest fällt.

Die Verwendung dieser Zwischentransportform hat sich in der Praxis bestens bewährt. Allerdings ist es bei dieser vorbekannten Lösung des Problems der Vermeidung der Bewegung großer Massen erforderlich, zu jeder Blasform eine dem zugehörigen Formnest entsprechende Zwischentransportform anzufertigen, da deren Formmulde exakt der Gestalt des Formnestes der Blasform angepaßt sein muß.

Der vorliegenden Erfindung liegt die Aufgabe zugrunde, unter Beibehaltung der vorstehend geschilderten Vorteile eine Vorformlings-Transportvorrichtung für eine Blasmaschine anzugeben, die einen einfacheren Aufbau hat.

Eine weitere Aufgabe der Erfindung besteht darin, ein Verfahren anzugeben, mit dem ein- oder mehrfach gekrümmte Hohlkörper kostengünstig herstellbar sind.

Diese Aufgaben werden erfindungsgemäß durch die Merkmale der Patentansprüche 1 und 10 gelöst.

Vorteilhafte Weiterbildungen der Erfindung sind in den Unteransprüchen gekennzeichnet.

Gemäß der vorliegenden Erfindung wird eine Blasmaschine mit einer Vorformlings-Transportvorrichtung vorgeschlagen, deren Formmulde zumindest in der Aufsicht geradlinig ausgebildet ist und die in der Schlauchaufnahmestellung entsprechend geradlinig unter dem Schlauchkopf bewegt wird, um das Schlauchstück aufzunehmen. Die Vorformlings-Transportvorrichtung wird dann so zu der Blasform bewegt, daß bevorzugt ein Endabschnitt des Vorformlings in der Formmulde der Transportvorrichtung über einem Endabschnitt des Formnestes der Blasform positioniert ist. In dieser Position wird der Bodenabschnitt in dem Bereich, in dem die Formmulde sich vertikal über dem Formnest befindet, geöffnet, so daß ein entsprechender Abschnitt des Schlauchstücks in das Formnest fällt. Anschließend wird die Transportvorrichtung so über der Blasform bewegt, daß kontinuierlich aufeinanderfolgende Abschnitte der Formmulde mit aufeinanderfolgenden Abschnitte des Formnestes vertikal fluchten, woraufhin nacheinander die zugehörigen Bodenabschnitte der Formmulde geöffnet werden, so daß abschnittsweise das gesamte Schlauchstück in das Formnest eingelegt wird. Die jeweilige Länge der Abschnitte hängt dabei vom Verlauf der Krümmung des Formnestes ab.

Auf diese Weise ist erreicht, daß eine einzige Vorformlings-Transportvorrichtung für Blasformen mit unterschiedlichen Formnestern verwendet werden kann. Ein besonderer Vorteil liegt zudem darin, daß der Bewegungsmechanismus für die Transportvorrichtung hierdurch nicht komplizierter wird, da die dreiaxiale Bewegung der Zwischenform lediglich zu einem anderen Zeitpunkt stattfindet, nämlich bei der Übergabe des Vorformlings an die Blasform.

In weiterer Ausgestaltung der Erfindung wird vorgeschlagen, daß die Formmulde im wesentlichen waagerecht verläuft. Hierdurch erhält die Formmulde einen besonders einfachen Aufbau. Es liegt jedoch auch im Rahmen der Erfindung, daß die Formmulde in vertikaler Richtung im wesentlichen dem Höhenverlauf des Formnestes angepaßt ist, um bei der Übergabe des Schlauches einen Längenausgleich zu schaffen.

Die Transportvorrichtung wird in der Schlauchaufnahmestellung bevorzugt in waagerechte Richtung verfahren. Es liegt aber auch im Rahmen der Erfindung, daß die Transportvorrichtung geradlinig im Winkel zur Horizontalen verfahren wird, um den schlauchförmigen Vorformling aufzunehmen.

Bei der Schlauchübergabe an die Blasform wird die Transportvorrichtung so bewegt, daß der schlauchförmige Vorformling successive über dem Formnest positioniert und freigegeben wird. Dabei kann es in einigen Fällen ausreichen, wenn die Transportvorrichtung in einer waagerechten Ebene in beiden Richtungen, d.h. in Richtung einer X- und einer Y-Achse verschoben wird. Je nach Verlauf des Formnestes kann aber auch vorgesehen sein, daß die Transportvorrichtung in der Schlauchabgabestellung angehoben oder abgesenkt wird, d.h. in der Y-Richtung verlagert wird, wobei es auch im Rahmen der Erfindung liegt, die Transportvorrichtung aus ihrer horizontalen Lage zu verschwenken, d.h. eine Kippbewegung ausführen zu lassen.

Die Transportvorrichtung kann durch jeden geeigneten Bewegungsmechanismus, beispielsweise durch einen Roboter bewegt werden. Zur Steuerung ihrer Bewegung kann beispielsweise auch eine entsprechende Schablone abgefahren werden. Geeignete Bewegungs- und Steuermechanismen sind dem Fachmann bekannt und nicht Gegenstand der vorliegenden Erfindung.

Am Boden der Formmulde der Transportvorrichtung sind Verschlußelemente angeordnet, die nacheinander geöffnet werden, um den Schlauch Stück für Stück aus der Formmulde freizugeben. Hierzu können am Boden der Formmulde quer verlaufende Stifte angeordnet sein, die bevorzugt mittels pneumatischer Zylinder zurückziehbar sind, so daß der Schlauch aus dem Boden der Formmulde austreten kann. Die Stifte können beispielsweise auch verschwenkbar gehalten sein. Andere Antriebsmittel anstelle der erwähnten pneumatischen Zylinder liegen im Rahmen der Erfindung.

Die Stifte können beidseitig der Formmulde angeordnet sein und im Winkel zueinander verlaufen, so daß der Boden querschnittlich eine V-Form erhält. Dies fördert eine exakte Positionierung des schlauchförmigen Vorformlings sowohl in der Formmulde der Transportvorrichtung als auch die ortsgetreue Abgabe an das Formnest, da der Schlauch beim Zurückziehen oder Verschwenken der Verschlußelemente nicht seitlich verrutschen kann.

Anstelle der Stifte können beispielsweise auch aneinander anschließende Klappen vorgesehen sein, die den Boden im geschlossenen Zustand im wesentlichen vollständig abschließen und eine ganzflächige Auflage des Schlauches zur Folge haben. Diese Klappen können ebenfalls beidseitig der Formmulde angeordnet sein und eine V-förmige Aufnahmemulde bilden.

Weitere Merkmale der Erfindung ergeben sich aus der nachfolgenden Beschreibung einer bevorzugten Ausführungsform einer Blasmaschine. Dabei zeigen:
- Fig. 1: eine perspektivische Ansicht einer unter einem Schlauchkopf angeordneten Vorformlings-Transportvorrichtung bei der Aufnahme eines schlauchförmigen Vorformlings;
- Fig. 2: einen rein schematischen Querschnitt durch die Transportvorrichtung gemäß Fig. 1 und
- Fig. 3: eine perspektivische Ansicht der Transportvorrichtung bei der Übergabe eines Vorformlings in das Formnest einer Blasform.

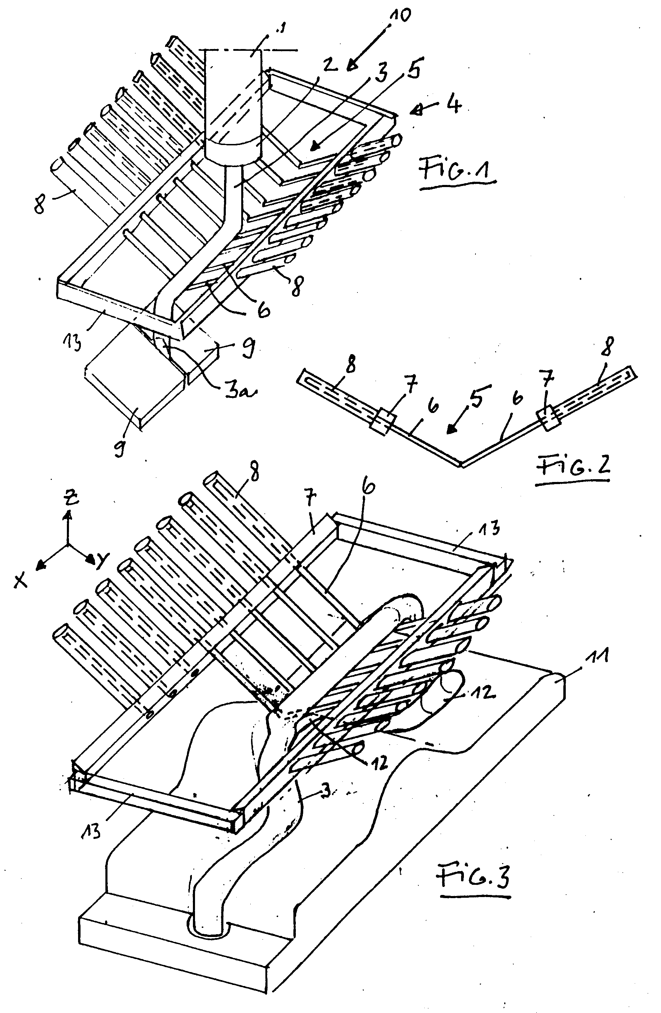

Fig. 1 zeigt einen einem Extruder nachgeschalteten Schlauchkopf 1, aus dessen in einem Düsenring 2 befindlicher Düse ein warmplastisch verformbares Schlauchstück 3 kontinuierlich nach unten ausgespritzt wird.

Das Schlauchstück 3 wird von einer nur teilweise dargestellten Vorformlings-Transportvorrichtung 4 in eine Formmulde 5 aufgenommen, die einen geradlinigen Achsenverlauf hat. Den Boden der Formmulde 5 bilden in kurzen Abständen angeordnete Stifte 6, die - wie Fig. 2 deutlich zeigt - in beidseitig an einen Rahmen bildenden dünnen Vierkantrohren 7 befestigte pneumatische Zylinder 8 eingreifen. Die Stifte 6 verlaufen im Winkel zueinander, wie Fig. 2 zeigt, so daß die Formmulde 5 im wesentlichen einen V-förmigen Querschnitt hat. Die Stifte 6 verschließen im ausgefahrenen Zustand den Boden der Formmulde 5. Wenn sie zurückgezogen werden, geben sie die Bodenöffnung der Formmulde 5 frei, so daß der Schlauch 3 nach unten austreten kann.

Die Transportvorrichtung 4 hat ein geringes Gewicht und muß nicht aus einem so hochwertigen Material gefertigt werden, wie die Blasform. Ihr beispielsweise aus dünnen Vierkantrohren bestehendes Gestell kann an dem Arm eines Roboters oder auf nicht dargestellten Rollen oder Rädern auf ebenfalls nicht dargestellten Schienen mit einem einfachen, gering dimensionierten Motor, z.B. einem einfachen Stellmotor, zwischen der Schlauchaufnahmeposition und der in Fig. 3 dargestellten Blasform hin- und herbewegt werden.

Fig. 1 läßt erkennen, wie das untere Ende 3a des Schlauchstücks 3 zwischen zwei in waagerechter Ebene verschiebbaren Quetschplatten 9 zusammengequetscht und damit geschlossen wird. Die Transportvorrichtung 4 wird während der Aufnahme des Schlauches 3 geradlinig in X-Richtung (Pfeil 10) verfahren, bis das gesamte Schlauchstück aufgenommen ist. Während das Schlauchstück 3 aus dem Düsenring 2 ausgestoßen und in die in Richtung des Pfeils 10 bewegte Transportvorrichtung eingelegt wird, wird in das Schlauchstück 3 durch die Düse des Schlauchkopfs 1 sogenannte Stützluft eingelassen, die dafür sorgt, daß das Schlauchstück 3 nach dem Zusammenquetschen seines hinteren Endes durch ein weiteres Quetschplattenpaar (nicht dargestellt) in der Formmulde 5 nicht zusammenfallen kann. Durch das Zusammenquetschen des Endes des Schlauchstücks 3 wird dieses von dem nachfolgenden Schlauchstück abgetrennt.

Nach dem Einlegen des Schlauchstücks 3 in die Vorform 5 wird diese auf ihrem nicht dargestellten Gestell in einer senkrecht zur X-Richtung liegenden Richtung über den unteren Teil 11 einer Blasform mit Formnest 12 soweit verfahren, bis der vorderen Abschnitt des Schlauchstücks 3 vertikal über dem vorderen Endabschnitt 13 des Formnestes 12 positioniert ist. In dieser Stellung wird das erste, einander gegenüberliegende Paar Stifte 6 (oder mehrere Stifte-Paare) in die zugehörigen pneumatischen Zylinder 8 zurückgezogen, wodurch ein kleiner Schlauchabschnitt nach unten freigegeben wird und in das Formnest 12 fallen kann. Die Transportvorrichtung wird anschließend stetig so in X-, Y- Z-Richtung bewegt, daß aufeinanderfolgende Längenabschnitte des Schlauchstücks 3 entlang des Formnestes 12 so positioniert werden, daß sie durch zeitlich abgestimmtes, fortschreitendes Zurückziehen der aufeinanderfolgenden Paare von Stiften 6 in das Formnest eingelegt werden. Dabei kann auch vorgesehen sein, daß die Transportvorrichtung 5 um eine oder mehrere der Achsen X, Y oder Z gekippt wird, falls dies zum einwandfreien Einbringen des Schlauchstücks in das Formnest erforderlich sein sollte.

Wenn das gesamte Schlauchstück 3 in das Formnest 12 eingelegt ist, wird die Transportvorrichtung 4 wieder zu dem Schlauchkopf 1 verfahren, woraufhin die Blasform 11 mittels eines zugehörigen oberen Teils geschlossen wird. Anschließend wird durch eine nicht dargestellte Blasnadel bevorzugt Luft in den Vorformling eingeführt, die ihn gegen die Wandung des Formnestes 12 drückt und dadurch den gewünschten Hohlkörper ausformt.

## Patentansprüche

1. Vorformlings-Transportvorrichtung für eine Blasmaschine zur Herstellung von ein- oder mehrfach gekrümmten Hohlkörpern wie Rohrstücken mit einem Schlauchkopf, der einen warmplastisch verformbaren Schlauch austrägt, und einer geteilten Blasform mit einem Formnest, wobei die Vorformlings-Transportvorrichtung eine oben offene Formmulde hat, deren Boden geöffnet werden kann, und zwischen dem Schlauchkopf und der Blasstation bewegbar ist,
**dadurch gekennzeichnet**,
daß die Formmulde (5) der Vorformlings-Transportvorrichtung (4) in der Aufsicht geradlinig ausgebildet ist,
daß die Vorformlings-Transportvorrichtung (4) in der Schlauchaufnahmestellung geradlinig verschiebbar ist, um ein Schlauchstück (3) in die Formmulde (5) aufzunehmen,
daß die Formmulde (5) eine Vielzahl von Bodenelementen (6) aufweist, die nacheinander geöffnet werden können, und
daß die Vorformlings-Transportvorrichtung in der Schlauchabgabestellung über dem Formnest (12) der Blasform (11) in mehreren Richtungen bewegbar ist, derart, daß das Schlauchstück (3) mit aufeinanderfolgenden Abschnitten über dem Formnest (12) positionierbar ist und dabei aus der Formmulde (5) freigegeben werden kann.

2. Vorformlings-Transportvorrichtung nach Anspruch 1,
dadurch gekennzeichnet, daß die Formmulde (5) im wesentlichen waagerecht verläuft und in der Schlauchaufnahmestellung in waagerechter Richtung verfahrbar ist.

3. Vorformlings-Transportvorrichtung nach Anspruch 1 oder 2,
dadurch gekennzeichnet, daß sie in der Schlauchabgabestellung in beiden waagerechten Richtungen (X-Richtung und Y-Richtung) verschiebbar ist.

4. Vorformlings-Transportvorrichtung nach einem der Ansprüche 1 bis 3,
dadurch gekennzeichnet, daß sie in der Schlauchabgabestellung in senkrechter Richtung heb- und senkbar ist.

5. Vorformlings-Transportvorrichtung nach einem der Ansprüche 1 bis 4,
dadurch gekennzeichnet, daß sie in der Schlauchabgabestellung kippbar ist.

6. Vorformlings-Transportvorrichtung nach einem der Ansprüche 1 bis 5,
dadurch gekennzeichnet, daß am Boden der Formmulde (5) Stifte (6) angeordnet sind, die mittels pneumatischer Zylinder (8) zurückziehbar sind.

7. Vorformlings-Transportvorrichtung nach einem der Ansprüche 1 bis 6,
dadurch gekennzeichnet, daß am Boden der Formmulde verschwenkbare Stifte angeordnet sind.

8. Vorformlings-Transportvorrichtung nach Anspruch 6 oder 7,
dadurch gekennzeichnet, daß die Stifte (6) beidseitig der Formmulde (5) gehalten sind und daß die Stifte (6) beider Seiten zueinander geneigt angeordnet sind, so daß der Boden querschnittlich eine V-Form erhält.

9. Vorformlings-Transportvorrichtung nach einem der Ansprüche 1 bis 5,
dadurch gekennzeichnet, daß der Boden der Formmulde durch eine Vielzahl von aneinander anschließenden Klappen gebildet ist.

10. Verfahren zum Herstellen von ein- oder mehrfach gekrümmten Hohlkörpern wie Rohrstücken, mit folgenden Schritten.
a) ein Schlauchkopf trägt einen warmplastisch verformbaren Schlauch aus,
b) eine Vorformlings-Transportvorrichtung wird geradlinig unter dem Schlauchkopf bewegt und nimmt den Schlauch in ihre Formmulde auf,
c) die Vorformlings-Transportvorrichtung wird in eine solche Position oberhalb des Formnestes einer Blasform bewegt, daß ein Endabschnitt der Formmulde mit dem darauf befindlichen Schlauch vertikal über einem Endabschnitt des Formnestes positioniert ist,
d) der Boden des Endabschnitts der Formmulde wird geöffnet, so daß der zugehörige Abschnitt des Schlauchs in das Formnest fällt,
e) die Vorformlings-Transportvorrichtung wird aus dem Bereich der Blasform wegbewegt, woraufhin die Blasform geschlossen und der Schlauch durch Einführen eines Blasmediums gegen die Wandung des Formnestes gedrückt wird,
dadurch gekennzeichnet daß nach Schritt d)
die Vorformlings-Transportvorrichtung so über der Blasform bewegt wird, daß kontinuierlich aufeinanderfolgende Abschnitte der Formmulde vertikal über aufeinanderfolgenden Abschnitten des Formnestes positioniert werden, woraufhin nacheinander die zugehörigen Bodenabschnitte der Formmulde geöffnet werden, bis der gesamte Schlauch in das Formnest der Blasform gefallen ist.

## Claims

1. A parison transporting device for a blow molding machine for producing hollow plastic articles bent once or several times, for instance tubular pieces, with a tube forming head which discharges a heat-moldable tube, and with a divided blow mold including a mold cavity, the parison transporting device comprising an upwardly open mold trough whose bottom can be opened, and being movable between said tube forming head and a blowing station,
**characterized in**
that said mold trough (5) of said parison transporting device (4) has a straight shape when viewed from above, that said parison transporting device (4) is movable in straight fashion in the tube receiving position for receiving a tubular piece (3) in said mold trough (5), that said mold trough (5) has a plurality of bottom elements (6) which can be opened one after the other, and that said parison transporting device in the tube discharging position is movable over said mold cavity (12) of said blow mold (11) in a plurality of directions such that said tubular piece (3) can be positioned with successive sections above said mold cavity (12) and can be released from said mold trough (5).

2. The parison transporting device of claim 1,
characterized in that said mold trough (5) extends substantially in horizontal direction and is movable in said tube receiving position in horizontal direction.

3. The parison transporting device of claim 1 or 2,
characterized in that it is movable in said tube discharging position in both horizontal directions (X-direction and Y-direction).

4. The parison transorting device of any of claims 1 to 3,
characterized in that it can be lifted and lowered in said tube discharging position in vertical direction.

5. The parison transporting device of any of claims 1 to 4,
characterized in that it is tiltable in said tube discharging position.

6. The parison transporting device of any of claims 1 to 5,
characterized in that pins (6) are arranged on the bottom of said mold trough (5) which can be retracted by means of pneumatic cylinders (8).

7. The parison transporting device of any of claims 1 to 6,
characterized in that pivotable pins are arranged on the bottom of said mold trough.

8. The parison transporting device of claim 6 or 7,
characterized in that said pins (6) are held at both sides of said mold trough (5) and that said pins (6) of both sides are inclined relative to one another such that said bottom is given a V-shaped form when viewed in cross-section.

9. The parison transorting device of any of claims 1 to 5,
characterized in that the bottom of said mold trough is formed by a plurality of adjacent doors.

10. A method for producing hollow plastic articles bent one or several times, for instance tubular pieces, comprising the following steps:
a) a tube forming head discharges a heat-moldable tube,
b) a parison transporting device is moved in straight fashion below said tube forming head and receives said tube in its mold trough,
c) said parison transporting device is moved into such a position above the mold cavity of a blow mold that an end section of said mold trough together with the tube located thereon is vertically position0ed above an end section of said mold cavity,
d) the bottom of said end section of said mold trough is opened, so that the associated section of said tube drops into said mold cavity,
e) the parison transporting device is moved away from the area of said blow mold, whereupon said blow mold is closed and said tube is pressed against the wall of said mold cavity by introduction of a blow medium,
characterized in
that after step d) said parison transporting device is moved above said blow mold such that continuously successive sections of said mold trough are positioned vertically above successive sections of said mold cavity,
whereupon the associated bottom section of said mold trough are successively opened until the whole tube has dropped into the mold cavity of said blow mold.

## Revendications

1. Dispositif de transport de paraison pour une machine de moulage par soufflage pour la fabrication de corps creux courbés une ou plusieurs fois comme des tronçons tubulaires avec une fière annulaire qui évacue un tuyau déformable thermoplastiquement, et un moule de soufflage divisé avec une cavité, le dispositif de transport de paraison ayant un moule ouvert en haut dont le fond peut être ouvert et qui est déplacable entre la filière tubulaire et la station de soufflage,
**caractérisé en ce que**
le moule (5) du dispositif de transport de paraison (4) est réalisé en ligne droite en une vue de dessus, en ce que le dispositif de transport de paraison (4) est déplacable en ligne droite dans la position de réception de tuyau afin de recevoir un tronçon tubulaire (3) dans le moule (5), en ce que le moule (5) présente un grand nombre d'éléments de fond (6) qui peuvent être ouverts les uns après les autres et en ce que le dispositif de transport de paraison, en position d'émission de tuyau au-dessus de la cavité (12) du moule de soufflage (11) est déplacable dans plusieurs directions de telle sorte que le troncon tubulaire (3) peut être positionné par des tronçons successifs au-dessus de la cavité (12) et peut être libéré ainsi du moule (5).

2. Dispositif de transport de paraison selon la revendication 1, caractérisé en ce que le moule (5) s'étend sensiblement horizontalement et est déplacable, en position de réception de tuyau, dans la direction horizontale.

3. Dispositif de transport de paraison selon la revendication 1 ou 2, caractérisé en ce que celui-ci, en position d'émission de tuyau, est déplacable dans les deux directions horizontales (direction x et direction y).

4. Dispositif de transport de paraison selon l'une des revendications 1 à 3, caractérisé qu'en position d'émission du tuyau, celui-ci peut être relevé et abaissé dans la direction verticale.

5. Dispositif de transport de paraison selon l'une des revendications 1 à 4, caractérisé en ce qu'il est basculant dans la position d'émission du tuyau.

6. Dispositif de transport de paraison selon l'une des revendications 1 à 5, caractérisé en ce que des tiges (6) sont disposées au fond du moule (5) qui peuvent être retirées par des vérins pneumatiques (8).

7. Dispositif de transport de paraison selon l'une des revendications 1 à 6, caractérisé en ce que sont disposés au fond du moule des tiges pivotantes.

8. Dispositif de transport de paraison selon la revendication 6 ou 7, caractérisé en ce que les tiges (6) sont tenues des deux côtés du moule (5) et que les tiges (6) des deux côtés sont disposées suivant une inclinaison les unes aux autres de telle sorte que le fond reçoit une forme en V en section transversale.

9. Dispositif de transport de paraison selon l'une des revendications 1 à 5, caractérisé en ce que le fond du moule est constitué d'une pluralité de volets successifs.

10. Procédé de fabrication de corps creux courbés une ou plusieurs fois comme des tronçons tubulaires, comprenant les étapes suivantes :
a) une filière évacue un tuyau dèformable thermoplastiquement,
b) un dispositif de transport de paraison est déplacé en ligne droite sous la filière et reçoit le tuyau dans son moule,
c) le dispositif de transport de paraison est amené dans une position au-dessus de la cavité d'un moule de soufflage de façon qu'un tronçon d'extrémité du moule avec le tuyau se trouvant sur celui-ci soit positionné verticalement audessus d'un tronçon d'extrémité de la cavité,
d) le fond du tronçon d'extrémité du moule est ouvert de telle sorte que le tronçon associé du tuyau tombe dans la cavité,
e) le dispositif de transport de paraison est éloigné de la zone du moule de soufflage, à la suite de quoi le moule de soufflage est fermé et le tuyau par l'introduction d'un milieu de soufflage est poussé contre la paroi de la cavité,
caractérisé en ce que selon l'étape d) le dispositif de transport de paraison est déplacé sur le moule de soufflage de façon que des tronçons qui se suivent continuellement du moule soient positionnés verticalement sur des tronçons successives de la cavité à la suite de quoi les tronçons de fond associés du moule sont ouverts les uns après les autres jusqu'à ce que l'ensemble du tuyau soit tombé dans la cavité du moule de soufflage.
